# FASCICULE DE BREVET EUROPEEN

(11) **EP 4 396 472 B1**
(45) Date de publication et mention de la délivrance du brevet: **01.04.2026**
(21) Numéro de dépôt: 22772503.3
(22) Date de dépôt: 01.09.2022
(51) Int. Cl.: F16G 3/08

(54) **PLAQUE DE JONCTION DE DEUX PORTIONS D'EXTREMITES DE BANDE TRANSPORTEUSE MUNIE D'UN FOURREAU, DISPOSITIF DE JONCTION COMPRENANT AU MOINS UNE TELLE PLAQUE DE JONCTION ET BANDE DE PLAQUES DE JONCTION ASSOCIEE**
VERBINDUNGSPLATTE FÜR ZWEI ENDEN EINES FÖRDERBANDES MIT EINER HÜLSE, VERBINDUNGSVORRICHTUNG MIT MINDESTENS EINER SOLCHEN VERBINDUNGSPLATTE UND ZUGEHÖRIGER STREIFEN VON VERBINDUNGSPLATTEN
PLATE FOR JOINING TWO END PORTIONS OF A CONVEYOR BELT, PROVIDED WITH A SHEATH, JOINING DEVICE COMPRISING AT LEAST ONE SUCH JOINING PLATE, AND ASSOCIATED STRIP OF JOINING PLATES

(30) Priorité: 01.09.2021 FR 2109152
(43) Date de publication de la demande: 10.07.2024
(73) Titulaire: FP Business Invest, 42400 Saint-Chamond (FR)
(72) Inventeur: TAVERNIER, Bernard, 42500 Le Chambon Feugerolles (FR); GUILLEMET, Frédéric, 69300 CALUIRE ET CUIRE (FR)
(74) Mandataire: Bringer IP
(86) Numéro de dépôt international: PCT/EP2022/074369
(87) Numéro de publication internationale: WO 2023/031349

(56) Documents cités:
- EP-B1- 3 189 251
- WO-A1-2020/002378

## Description

### DOMAINE TECHNIQUE DE L'INVENTION

L'invention concerne, de façon générale, le domaine technique des dispositifs de jonction pour bandes transporteuses destinés à relier des extrémités d'une bande transporteuse. Dans un but de simplification le terme de bande transporteuse aura, par convention, dans la présente description, aussi bien le sens de bande transporteuse que celui de courroie.

L'invention se rapporte plus spécifiquement à un dispositif de jonction de bande transporteuse, en particulier munie d'une armature textile.

### ÉTAT DE LA TECHNIQUE ANTÉRIEURE

On connaît les bandes transporteuses, appelées également tapis transporteurs, utilisées pour transporter, ou convoyer, différents matériaux ou différents produits, tels que du charbon, des minerais, des produits industriels ou agricoles. Ces bandes transporteuses consistent en des bandes réalisées en un élastomère armé, ou en une matière de synthèse armée, d'une longueur et d'une largeur appropriées, dont les extrémités doivent être reliées entre elles, avant montage, ou après montage, sur des dispositifs de support et d'entraînement comportant des rouleaux de renvoi et des rouleaux fous. Souvent ces dispositifs comportent également des organes tendeurs, ayant pour but de bien tendre la bande transporteuse.

Jusqu'à présent différents moyens ont été utilisés pour effectuer cette liaison des extrémités des bandes transporteuses.

À l'origine, et encore aujourd'hui, on utilise la vulcanisation lorsque la bande est constituée d'un élastomère vulcanisable armé. Après un travail de préparation destiné à créer dans chaque extrémité des profils complémentaires qui s'appliquent les uns sur les autres lorsque l'on rapproche lesdites extrémités, la vulcanisation est effectuée avec apport de chaleur et de pression comme cela est bien connu. Une variante de la vulcanisation est le collage à froid.

Un autre moyen de liaison connu consiste dans le fait d'utiliser des agrafes en forme générale de U, découpées dans du feuillard métallique, lesquelles agrafes comportent des plaques supérieures et des plaques inférieures reliées par des charnons, ces agrafes étant fixées en deux séries à cheval sur chacune des extrémités de bande transporteuse à relier, de telle sorte que les charnons dépassent et que ceux d'une série puissent être imbriqués entre les charnons de l'autre série, une tige de liaison et d'articulation étant ensuite passée à l'intérieur des charnons imbriqués de manière à relier ainsi les deux extrémités en formant une sorte de charnière. Les moyens connus utilisés pour fixer les agrafes sur les extrémités de bande transporteuse consistent en des moyens de fixation à tige tels que des crampons, des rivets et des vis.

Dans un passé plus récent on a proposé des dispositifs de jonction faisant appel à des éléments de liaison plats généralement en élastomère armé ou en matière de synthèse armée, disposés respectivement sur un côté et sur l'autre côté des extrémités de bande transporteuse et fixés sur lesdites extrémités qu'il s'agit de relier. Des exemples de tels dispositifs de jonction sont donnés dans les brevets EP-0827575-B1, EP-3189251-B1 et EP-1163459-B1. Ces dispositifs comportent une plaque de jonction supérieure et une plaque de jonction inférieure, éventuellement reliées par une partie centrale. Ces plaques de jonction inférieure et supérieure présentent un écartement adapté pour y engager l'extrémité respective d'une bande transporteuse, en la faisant venir approximativement en butée contre la partie centrale, ou bien dans le cas où le dispositif de jonction ne présente pas de partie centrale, contre une entretoise prévue à cet effet lors du montage, puis retirée ultérieurement. En d'autres termes, ces dispositifs de jonction comportent deux paires d'ailes de fixation en vis-à-vis, les extrémités de la bande transporteuse étant introduites respectivement entre deux ailes d'une même paire. La fixation des parties inférieure et supérieure formant plaque de jonction sur les extrémités de la bande transporteuse s'effectue généralement au moyen de rivets, de pointes, de crampons, de systèmes vis-écrous, ou encore par collage à froid ou par vulcanisation à plat des ailes contre les surfaces plates extérieures de la bande transporteuse engagées entre les ailes.

Les dispositifs de jonction sont généralement réalisés en une matière souple et élastique, par exemple en caoutchouc vulcanisé, ou en une matière de synthèse, telle que du polyuréthane, dans laquelle est noyée une armature, généralement textile, présentant une extensibilité dans le sens longitudinal de la bande transporteuse.

L'extensibilité des armatures de ce genre de dispositifs de jonction dans le sens longitudinal de la bande transporteuse a pour but de permettre aux dispositifs de jonction montés sur les bandes transporteuses, de franchir de façon répétée, sans usure ni fatigue excessive pouvant entraîner une détérioration rapide, les parties courbes du parcours des bandes transporteuses, à savoir, le contournement des rouleaux d'entraînement, des rouleaux de renvoi et des rouleaux tendeurs. En effet, lors de ce fonctionnement la partie supérieure des dispositifs de jonction subit une force de traction tandis que leur partie inférieure (c'est-à-dire celle orientée vers la surface extérieure des rouleaux) subit une force de compression, et, ce, en raison de la différence du parcours de ces parties, ces parcours étant directement proportionnels au rayon de courbure, qui varie en raison de l'épaisseur des dispositifs de jonction.

Les contraintes étant bien différentes entre les parties inférieure et supérieure, et afin d'améliorer encore la résistance à l'usure de ces dispositifs de jonction, la Demanderesse a amélioré son produit par le passé de sorte à conférer à la partie supérieure une extensibilité plus grande que celle de la partie inférieure. Dans ce type de jonction de bande transporteuse, la partie centrale a ensuite évolué de sorte à être désolidarisée des plaques inférieure et supérieure, ceci pour laisser place à l'utilisation d'entretoises indépendantes utilisées au moment du montage contre lesquelles vient buter la première des extrémités de la bande transporteuse qui est mise en place dans la jonction, entre les plaques inférieure et supérieure, puis ces entretoises sont retirées avant mise en place de la seconde des extrémités de la bande transporteuse. En effet, les dispositifs de jonction étaient réalisés par moulage ou par injection et présentaient une structure en « H » dont les plaques inférieure et supérieure et la partie centrale étaient formées d'un seul tenant. Ceci exigeait pour leur fabrication autant de moules que d'épaisseurs de bandes transporteuses rencontrées sur le terrain, et ces dispositifs de jonction devaient être fabriqués, de ce fait, en très petites séries, ce qui augmentait le prix de revient, à la fabrication, au stockage et à la distribution.

Cette problématique, à savoir celle de la multiplicité des moules et des produits moulés devant faire face aux épaisseurs variées de bandes transporteuses, a été résolue notamment en produisant, comme exposé ci-avant, les dispositifs de jonction en trois parties distinctes : une partie constituant des ailes supérieures gauche et droite formant une seule pièce, une partie constituant des ailes inférieures gauche et droite formant une seule pièce, et une partie intermédiaire, correspondant à la barre médiane du profil en « H », cette partie intermédiaire formant entretoise. Dans une telle configuration, il devient possible de fabriquer les deux plaques inférieure et supérieure isolément et chacune est configurée de sorte à être adaptée aux efforts qu'elles subissent (forces de compression/traction) et aux contraintes associées. Par exemple, la plaque inférieure est agencée pour subir sans dommage le passage sur des rouleaux d'entraînement, des rouleaux de renvoi et des rouleaux tendeurs, entraînant ou renvoyant la bande transporteuse aux extrémités de laquelle est monté le dispositif de jonction considéré, la plaque inférieure venant directement au contact de ces organes d'entrainement de la bande. La plaque supérieure est quant à elle directement au contact des différents matériaux ou différents produits transportés sur la bande transporteuse. Par ailleurs, la plaque supérieure est aussi généralement balayée par des racleurs.

Plus récemment, la Demanderesse a fait évoluer ce produit pour obtenir un dispositif de jonction dont les deux plaques de jonction inférieure et supérieure sont similaires voire identiques de sorte qu'il il devient possible de fabriquer un seul type de plaques de jonction et non plus deux plaques de jonction différentes. En effet, les plaques de jonction sont généralement découpées dans une bande ou portion de bande continue de plusieurs plaques de jonction successives. Selon cette évolution, il est alors possible de fabriquer une plaque de jonction inférieure et une plaque de jonction supérieure correspondante à partir de la même bande ou portion de bande de plaques de jonction.

Il résulte de l'application d'une telle solution que les extensibilités des armatures intégrées dans les plaques de jonctions sont identiques, qu'il s'agisse de la plaque de jonction inférieure ou supérieure, puisqu'elles sont formées à partir de la même bande ou portion de bande fabriquée. Dans ce cas, et contrairement aux préjugés d'un homme du métier, on pouvait s'attendre à ce que l'utilisation d'une armature identique entre les deux plaques de jonction inférieure et supérieure constitue une évolution à contre-courant de celle visant à conférer à la partie supérieure une extensibilité plus grande que celle de la partie inférieure. Au contraire, la maîtrise de l'élasticité des armatures est telle qu'en utilisant une armature d'élasticité bien déterminée, il est possible de fabriquer des plaques de jonction répondant aux problèmes de l'art antérieur, c'est-à-dire en garantissant sa résistance à l'usure, bien qu'elles soient utilisées à la fois dans la plaque de jonction inférieure et dans la plaque de jonction supérieure.

En tout état de cause, l'extensibilité est devenue une caractéristique prépondérante dans la conception d'une telle plaque de jonction en vue d'obtenir un dispositif de jonction suffisamment souple et élastique pour subir sans dommage le passage sur des rouleaux d'entraînement et sur des rouleaux de renvoi tout en étant dotée d'une résistance à la traction le rendant apte à résister sans dommage à tous les efforts qu'elle subit. Ces caractéristiques d'extensibilité et de résistance à de tels efforts de la plaque de jonction sont conférées à la fois par le matériau souple et élastique (caoutchouc vulcanisé, matière de synthèse telle que du polyuréthane) formant la plaque de jonction et par l'armature qui y est intégrée offrant à la fois une extensibilité dans le sens longitudinal de la bande transporteuse et une résistance adaptée pour résister aux plus grands efforts de traction subis par la bande transporteuse.

En marge de ces évolutions, les utilisateurs ont un besoin toujours grandissant de pouvoir disposer d'un moyen de contrôle de la structure de la bande transporteuse et des jonctions mises en place afin de pouvoir prévenir et anticiper toute rupture de la bande transporteuse. De cette manière, il est possible de prévoir des opérations de maintenance lors de périodes prévues à l'avance et éviter toute interruption imprévue de convoyage par la bande transporteuse. De cette manière, le matériel utile à la maintenance peut être prévu à l'avance tandis que la bande transporteuse est encore en fonctionnement et l'opération consistant à intervenir sur la bande transporteuse nécessitant l'arrêt du convoyeur peut être réduite à son maximum. Cela permet une maîtrise de l'usure des bandes transporteuses et une réduction globale des coûts pour l'utilisateur.

### EXPOSE DE L'INVENTION

L'invention vise à remédier à tout ou partie des inconvénients de l'état de la technique en proposant notamment une solution permettant de disposer dans un dispositif de jonction, d'un espace dédié à la mise en place d'un équipement électronique relativement plat tel qu'un circuit électronique, une puce RFID et ou un ou plusieurs capteurs, permettant de pouvoir recueillir, éventuellement en combinaison avec d'autres moyens extérieurs, des informations visant à anticiper tout risque de rupture, le tout en garantissant les caractéristiques essentielles du dispositif de jonction en terme de résistance, d'extensibilité et d'épaisseur constante pour éviter tout risque de prise par les racleurs.

Pour ce faire est proposé, selon un premier aspect de l'invention, une plaque de jonction de deux portions extrémités de bande transporteuse, la plaque de jonction présentant deux bords latéraux s'étendant chacun dans une direction longitudinale de référence de la plaque de jonction, la plaque de jonction comportant deux ailes s'étendant continument dans la direction longitudinale de référence, chacune le long d'un des bords latéraux, et formant chacune une interface de fixation apte à être fixée à l'une des portions d'extrémité de la bande transporteuse, et une zone intermédiaire s'étendant continument dans la direction longitudinale de référence de la plaque de jonction, la zone intermédiaire étant située à distance des deux bords latéraux et reliant les deux ailes, caractérisée en ce que la zone intermédiaire comporte un fourreau s'étendant de façon continue dans la direction longitudinale de référence de la plaque de jonction.

Le fourreau forme ainsi une poche s'étendant longitudinalement dans la zone intermédiaire et délimitant un espace intérieur à l'intérieur de duquel l'équipement électronique peut être logé. Grâce à une telle combinaison de caractéristiques, il est possible de placer facilement à l'intérieur du fourreau un équipement électronique relativement plat situé dans une zone intermédiaire dépourvue de moyen de fixation et qui n'entraîne aucune contrainte sur la fixation de la plaque de jonction lors de son utilisation étant donné que cette zone intermédiaire est distincte des ailes dédiées à assurer sa fixation à l'une des portions d'extrémité de la bande transporteuse. Un tel équipement électronique peut être par exemple, de façon non exhaustive, un circuit électrique ou une puce RFID. Un tel équipement électronique peut également être formé d'une partie d'un équipement plus important donc une partie est déportée. Par exemple, l'équipement électronique peut comporter seulement un voire plusieurs fils électriques, voire encore un faisceau ou réseau de fils électriques.

On notera ici que la direction longitudinale correspond à la direction de la plaque de jonction et non celle de la bande transporteuse elle-même. Lorsque la plaque de jonction est placée en position de jonction de deux portions d'extrémité de bande transporteuse, ladite plaque de jonction recouvre un même côté (inférieur ou supérieur) de chacune des portions d'extrémités de la bande transporteuse, la direction longitudinale de la plaque de jonction s'étend suivant une composante transversale de la bande transporteuse. À noter également que les directions longitudinales de la plaque de jonction et de la bande transporteuse ne sont pas nécessairement perpendiculaires, la plaque de jonction été placée de préférence de sorte à former un léger angle par rapport à la direction transversale de la bande transporteuse et ainsi limiter le risque de prise, et donc d'usure, par les racleurs.

Selon un mode de réalisation, la plaque de jonction comporte un corps en matériau flexible, le corps de la plaque de jonction comprenant, de préférence étant constitué par, la zone intermédiaire et les ailes de la plaque de jonction, la plaque de jonction comprenant une armature, de préférence textile, logée à l'intérieur du corps, le fourreau étant solidaire de l'armature et de préférence textile. On obtient ainsi un fourreau solidaire de l'armature et distinct du matériau flexible du corps de la plaque de jonction et entourant l'armature. De cette manière, le fourreau, de préférence textile, forme une séparation entre cette matière flexible, et l'espace intérieur du fourreau destiné à accueillir l'équipement électronique. En pratique, même si le textile ne confère pas une étanchéité parfaite, cette séparation est suffisante pour éviter le transfert du matériau flexible dans l'espace intérieur du fourreau durant les opérations de vulcanisation.

Selon un mode de réalisation, l'armature - généralement de type textile - est configurée de sorte à présenter une extensibilité comprise entre 10% et 25%, de préférence entre 15% et 20%. On entend par le caractère extensible, la capacité d'allongement de l'armature, c'est-à-dire qu'une extensibilité comprise entre 10 et 25% signifie qu'elle est configurée pour résister à un allongement d'au moins 10% et de maximum 25%, ceci sans rupture ni endommagement. Cette extensibilité de l'armature, c'est-à-dire cet allongement élastique dans le sens longitudinal de la bande transporteuse soumis aux efforts de traction, détermine également l'extensibilité de la plaque de jonction elle-même étant donné que l'armature présente une extensibilité plus faible que celle de la matière souple et élastique dans laquelle elle est noyée (caoutchouc vulcanisé, matière de synthèse telle que du polyuréthane, etc.). Une telle extensibilité dans le sens longitudinal de la bande transporteuse, c'est à dire suivant une composante transversale de la plaque de jonction, assure un bon compromis de résistance aux contraintes subies à la fois par la plaque de jonction inférieure et par la plaque de jonction supérieure.

Selon un mode de réalisation, le fourreau présente des ouvertures débouchant de part et d'autre longitudinalement de la plaque de jonction. De cette manière, l'espace intérieur du fourreau est accessible depuis l'extérieur par l'une au moins de ces ouvertures, même lorsque la plaque de jonction est en position de jonction des portions d'extrémités de bande transporteuse. Ceci est particulièrement avantageux, par exemple pour mener des opérations de maintenance sur l'équipement électronique sans avoir à intervenir sur l'intégrité structurelle des plaques de jonction. On notera également qu'avec une au moins de ces ouvertures, de préférence les deux, il est possible de placer l'équipement électronique dans le fourreau avant mais surtout également après les opérations de vulcanisation. Même si certains équipements électroniques sont résistants à hautes températures les rendant compatibles à des températures de vulcanisation (autour de 170°C par exemple), la possibilité de placer l'équipement électronique après la vulcanisation rend les opérations faciles et permet d'avoir un plus large choix dans l'étendue des équipements électroniques utilisables.

Selon un mode de réalisation, le fourreau comprend au moins deux nappes textiles distinctes superposées et jointes ensemble au niveau d'au moins deux jointures espacées transversalement pour délimiter un espace intérieur du fourreau. On entend par le vocable nappe un ensemble de fibres textiles disposées en une couche régulière. Un tel fourreau est particulièrement simple à fabriquer et permet de conserver l'extensibilité de la plaque de jonction.

Selon un mode de réalisation, les jointures comprennent au moins un fil cousu pour assembler les deux nappes textiles. Chacune des jointures forme une couture s'étendant longitudinalement par rapport à la plaque de jonction et permet de délimiter transversalement le fourreau de façon simple tout en conservant l'extensibilité de la plaque de jonction.

Selon un mode de réalisation, une partie au moins du fourreau est constituée par au moins une portion de l'armature textile. On minimise ainsi les composants intégrés à la plaque de jonction et on permet de limiter toute surépaisseur de la plaque de jonction.

Selon un mode de réalisation, au moins une première des deux nappes textiles du fourreau est formée à partir d'au moins une portion de l'armature textile.

Selon un mode de réalisation, le fourreau est tissé dans l'armature textile. On minimise ainsi au maximum les composants intégrés à la plaque de jonction et on permet de limiter toute surépaisseur de la plaque de jonction.

Selon un mode de réalisation, l'armature comprend des fils de trame et des fils de chaîne tissés ensemble en une pièce, l'armature textile comportant, en coupe transversale, une portion centrale formant le fourreau et interposée entre deux portions distales, les deux portions distales comportant de préférence une couche de textile tissé. On obtient ainsi une configuration dans laquelle le fourreau est tissé dans l'armature textile, l'épaisseur de la portion centrale formant le fourreau étant de préférence égal à l'épaisseur de chaque portion distale et la portion centrale étant composée de deux nappes distinctes reliées entre elles transversalement par le tissage des fils entre eux.

Selon un autre aspect de l'invention, celle-ci a trait à un dispositif de jonction de deux portions d'extrémités de bande transporteuse remarquable en ce qu'il comprend au moins une plaque de jonction telle que décrite ci-avant.

Selon un mode de réalisation, le dispositif de jonction comprend au moins deux plaques de jonction configurées pour recouvrir chacune un côté distinct des portions d'extrémités de la bande transporteuse de sorte que les portions d'extrémités de la bande transporteuse soient disposées chacune entre les deux plaques de jonction, les plaques de jonction étant fixées ensemble par des moyens de fixation agencés pour traverser respectivement une aile de l'une des plaques de jonction, une des portions d'extrémité de la bande transporteuse puis une aile de l'autre plaque de jonction, le dispositif de jonction étant remarquable en ce que l'une au moins des plaques de jonction, de préférence les deux plaques de jonction, est(sont) telle(s) que décrite(s) ci-avant.

Selon un autre aspect, l'invention concerne également une bande de plaques de jonction présentant deux bords latéraux s'étendant chacun continument dans une direction longitudinale de référence de la bande de plaques de jonction, la bande de plaques de jonction comportant deux ailes s'étendant continument dans la direction longitudinale de référence, chacune le long d'un des bords latéraux, et formant chacune une interface de fixation apte à être fixée à l'une des portions d'extrémité de bande transporteuse, et une zone intermédiaire s'étendant continument dans la direction longitudinale de référence de la bande de plaques de jonction, la zone intermédiaire étant située à distance des deux bords latéraux et reliant les deux ailes, caractérisée en ce que la zone intermédiaire comporte un fourreau s'étendant de façon continue dans la direction longitudinale de référence de la bande de plaques de jonction.

Selon un mode de réalisation, la bande de plaques de jonctions présente une longueur supérieure ou égale à 5 m, de préférence supérieure ou égale à 10 m et/ou inférieure ou égale à 50 m, de préférence inférieure ou égale à 25 m.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en plan d'un dispositif de jonction selon un mode de réalisation, vu par le dessus ;
[Fig. 2] : une vue en coupe longitudinale selon la coupe A-A de la figure 1 d'un dispositif de jonction, représentant en éclaté les différents éléments qui le constituent ;
[Fig. 3] : une vue d'ensemble en perspective qui illustre un dispositif de jonction selon un mode de réalisation de l'invention qui relie les deux extrémités d'une bande transporteuse ;
[Fig. 4] : une vue en section longitudinale, qui illustre un dispositif de jonction selon un mode de réalisation ;
[Fig. 5] : une vue en coupe d'un dispositif de fixation selon un mode de réalisation ;
[Fig. 6] : une vue en coupe d'une armature selon un mode de réalisation ;
[Fig. 7A] : une vue en coupe d'une armature selon un mode de réalisation ;
[Fig. 7B] : un détail de la figure 7A ;
[Fig. 8] : une vue en coupe d'une armature selon un mode de réalisation ;
[Fig. 9A] : une vue d'une bande de plaques de jonction inférieures selon un mode de réalisation ;
[Fig. 9B] : une vue d'une bande de plaques de jonction supérieures selon un mode de réalisation.

Pour plus de clarté, les éléments identiques ou similaires sont repérés par des signes de référence identiques sur l'ensemble des figures.

### DESCRIPTION DÉTAILLÉE D'UN MODE DE RÉALISATION

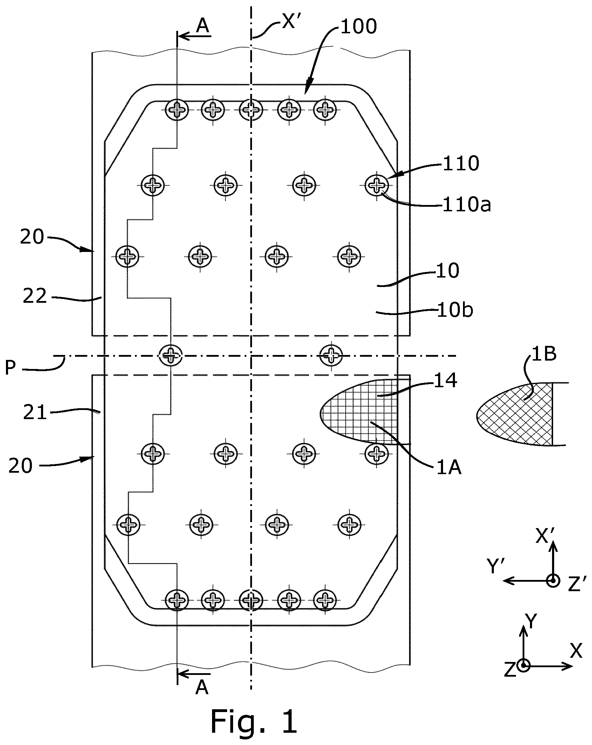

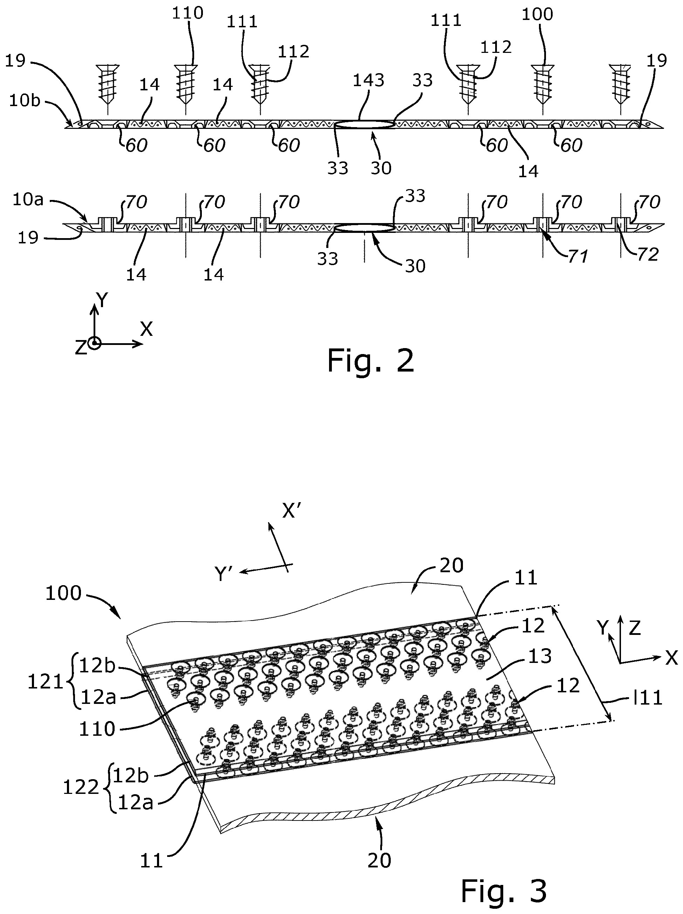

La figure 1 illustre une vue en plan, par le dessus, d'un dispositif de jonction **100** de deux portions d'extrémités **21,** 22 d'une bande transporteuse **20.** Plus précisément, cette figure fait apparaître une plaque de jonction **10** supérieure d'un dispositif de jonction **100.** Le dispositif de jonction **100** comporte une première plaque de jonction inférieure **10a** visible à la figure 2 par exemple, et une seconde plaque de jonction supérieure **10b.** Les deux plaques de jonction **10a, 10b** recouvrent chacune, en position de jonction, un côté distinct des portions d'extrémités **21,** 22 de la bande transporteuse **20** de sorte que les portions d'extrémités **21,** 22 de la bande transporteuse **20** soient disposées chacune entre les deux plaques de jonction **10,** en particulier interposées chacune verticalement entre les deux plaques de jonction **10.**

Dans la description et les revendications on adoptera à titre non limitatif la terminologie longitudinal, transversal et vertical en référence au trièdre **X, Y, Z** indiqué aux figures et attaché à la plaque de jonction **10,** et indirectement au dispositif de jonction **100** correspondant. De plus, les termes « supérieur », « inférieur », « vertical » et leurs dérivés font référence à la position ou à l'orientation d'un élément ou d'un composant, cette position ou cette orientation étant considérée lorsque les plaques de jonction **10** sont en configuration de service et s'étendent dans un plan horizontal. Le trièdre **X', Y', Z'** indiqué aux figures est attaché quant à lui à la bande transporteuse **20.** Lorsque les plaques de jonction **10a, 10b** sont placées en position de jonction de deux portions d'extrémité **21,** 22 de bande transporteuse **20,** la direction longitudinale **X** de la plaque de jonction **10** s'étend globalement suivant la largeur de la bande transporteuse **20,** c'est-à-dire suivant une composante au moins transversale **Y** de la bande transporteuse **20,** étant entendu que les directions longitudinales **X** et **X'** de la plaque de jonction **10** et de la bande transporteuse **20** respectivement ne sont pas nécessairement perpendiculaires comme illustré sur les figures de manière simplifié. Au contraire, l'axe longitudinal **X** des plaques de jonction **10** et le dispositif de jonction **100** correspondant est placée de préférence de sorte à former un léger angle par rapport à la direction transversale **Y'** de la bande transporteuse **20,** par exemple entre 5 et 10 degrés, et ainsi limiter le risque de prise par des racleurs.

Par simplification ici sur les figures, le sens longitudinal **X** de la plaque de jonction **10** ou du dispositif de jonction **100** est parallèle au sens transversal **Y'** de la bande transporteuse **20,** le dispositif de jonction **100** étant monté sur des portions d'extrémités **21, 22** de la bande transporteuse **20** qu'il relie. Le sens transversal **Y** de la plaque de jonction **10** ou du dispositif de jonction **100** est, selon la même simplification, perpendiculaire au sens longitudinal **X** et parallèle, dans cette figure, au sens longitudinal **X'** de la bande transporteuse **20.**

Chacune des plaques de jonction **10** présente deux bords latéraux **11** s'étendant chacun dans une direction longitudinale **X** de référence de la plaque de jonction **10.** La distance entre ces bords latéraux **11** correspond à la largeur **111** de la plaque de jonction **10** correspondante. La plaque de jonction **10** comporte deux ailes **12** s'étendant continument dans la direction longitudinale **X** de référence, chacune le long d'un des bords latéraux **11,** et formant chacune une interface de fixation apte à être fixée à l'une des portions d'extrémité **21, 22** de la bande transporteuse **20.** En particulier, le dispositif de jonction **100** comprend des moyens de fixation ou d'assemblage **110** pour fixer les deux plaques de jonction **10a, 10b** entre elle, au niveau de leurs ailes **12,** et avec les portions d'extrémités **21, 22** correspondantes de la bande transporteuse **20.**

La plaque de jonction **10** comporte également une zone intermédiaire **13** s'étendant continument dans la direction longitudinale **X** de référence de la plaque de jonction **10,** la zone intermédiaire **13** étant située à distance des deux bords latéraux **11** et reliant les deux ailes **12.** De préférence ici, la zone intermédiaire **13** est centrée transversalement entre les deux bords latéraux **11,** c'est-à-dire qu'elle se trouve à équidistance de chacun des deux bords latéraux **11** et que les deux ailes **12** présentent chacune une largeur, prise transversalement, qui sont égales l'une par rapport à l'autre. La zone intermédiaire **13** forme ici une zone sans interface de fixation séparant chacune des deux ailes **12** de la plaque de jonction **10** associée en les liant.

Ces plaques de jonction **10, 10a, 10b** comprennent un corps **15** réalisé en une matière souple et élastique, par exemple en caoutchouc vulcanisé, ou en une matière de synthèse telle que du polyuréthane et elles comportent une armature **14** incorporée, généralement de type textile. Les écorchés **1A** et **1B** font apparaître deux types d'armatures **14** de type textile, qui sont tissées et comprennent des fils de trame **141** et des fils de chaîne **142** : dans l'armature **14** visible sur l'écorché **1A** le tissu est disposé de façon telle que ses fils de trame **141,** ou bien ses fils de chaîne **142,** sont orientés au moins approximativement dans le sens longitudinal X de la plaque de jonction **10 ;** dans l'armature **14** visible sur l'écorché **1B,** les fils de trame **141** et les fils de chaîne **142** présentent une orientation inclinée à 45 degrés par rapport à l'axe longitudinal X de la plaque de jonction **10.**

On remarque également sur cette figure 1 des têtes **110a** de vis **111** qui forment un exemple de moyens de fixation ou d'assemblage **110** du dispositif de jonction **100** à la bande transporteuse **20.**

Le dispositif de jonction **100** de la figure 1 est composé d'au moins deux éléments : un élément formant plaque de jonction supérieure **10b,** et un élément formant plaque de jonction inférieure **10a,** non visible sur la figure 1, lequel est situé sous l'élément formant plaque de jonction supérieure **10b.** Plus précisément, la coupe éclatée de la figure 2 fait apparaître successivement: des vis d'assemblage **111** formant moyens de fixation **110,** la plaque de jonction **10b** supérieure munie d'inserts **60** incorporés dans la plaque de jonction **10b** supérieure, en particulier dans le corps **15** de la plaque de jonction **10b** supérieure au niveau des ailes **12** formant interfaces de fixation, et la plaque de jonction inférieure **10a** comportant des inserts taraudés **70** logés dans le corps **15** de ladite la plaque de jonction inférieure **10A,** au niveau des ailes **12** formant interfaces de fixation.

Les inserts **60** agencés pour recevoir les têtes **110a** de vis **111** se présentent de façon générale sous forme de rondelles **61** percées comportant une cuvette apte à loger les têtes **110a** des vis **111** destinées à passer dans le trou des rondelles percées.

Les inserts **70** comportent chacun une partie tubulaire centrale dont la surface cylindrique intérieure est taraudée et est apte à recevoir une vis **111** vissée dans le taraudage, lesdites parties tubulaires centrales dépassant à partir de la surface supérieure de la plaque de jonction **10a** inférieure du dispositif de jonction **100.**

N'est pas illustré sur cette figure un élément intermédiaire tel qu'une entretoise généralement amovible présentant par exemple la forme d'une douille traversante configurée pour être interposée verticalement entre les deux plaques de jonction **10** pour maintenir écartées lesdites plaques de jonction **10** durant l'opération de mise en place du dispositif de fixation **100.**

Comme évoqué en préambule, la Demanderesse a fait évoluer ce type de produit décrit ci-avant pour obtenir un dispositif de jonction dont les deux plaques de jonction **10** inférieure et supérieure sont similaires voire identiques de sorte qu'il devient possible de fabriquer un seul type de plaques de jonction **10** et non plus deux plaques de jonctions différentes. Un exemple de dispositif de jonction **100** selon ce type est illustré à la figure 3.

Le dispositif de jonction **100** illustré sur cette figure 3 comporte une première plaque de jonction inférieure **10a,** et une seconde plaque de jonction supérieure **10b.** Les plaques de jonction **10a, 10b** sont configurées pour recouvrir chacune un côté distinct des portions d'extrémité **21, 22** de la bande transporteuse **20** de sorte que la bande transporteuse **20** est interposée verticalement entre les deux plaques de jonction **10a, 10b.**

Les plaques de jonction **10a, 10b** forment une première paire **121** d'ailes **12a, 12b** qui pince une première portion d'extrémité **21** de la bande transporteuse **20** et une seconde paire **122** d'ailes **12a, 12b** qui pince une seconde portion d'extrémité 22 de la bande transporteuse **20.** Ici les moyens de fixation **110** sont répartis de sorte à ce qu'ils fixent une première paire d'aile **121** dans un sens et fixent la deuxième paire d'aile **122** dans l'autre sens.

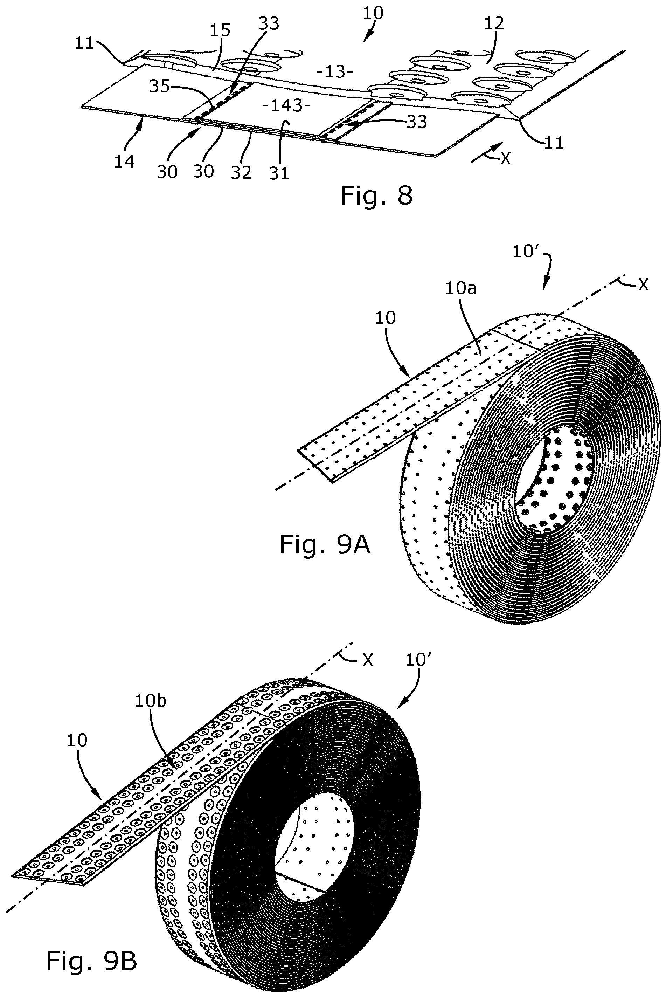

Les plaques de jonction **10** sont généralement découpées dans une bande ou portion de bande **10'** continue de plusieurs plaques de jonction **10** successives, comme illustré à titre d'exemple sur la figure 9A et la figure 9B qui illustrent des rouleaux de bande **10'** continue successivement de plusieurs plaques de jonction inférieure **10a,** et respectivement supérieures **10b.** Selon cette évolution, il est alors possible de fabriquer à la fois une plaque de jonction inférieure et une plaque de jonction supérieure correspondante à partir de la même bande ou portion de bande **10'** de plaques de jonction **10** (non illustré ici).

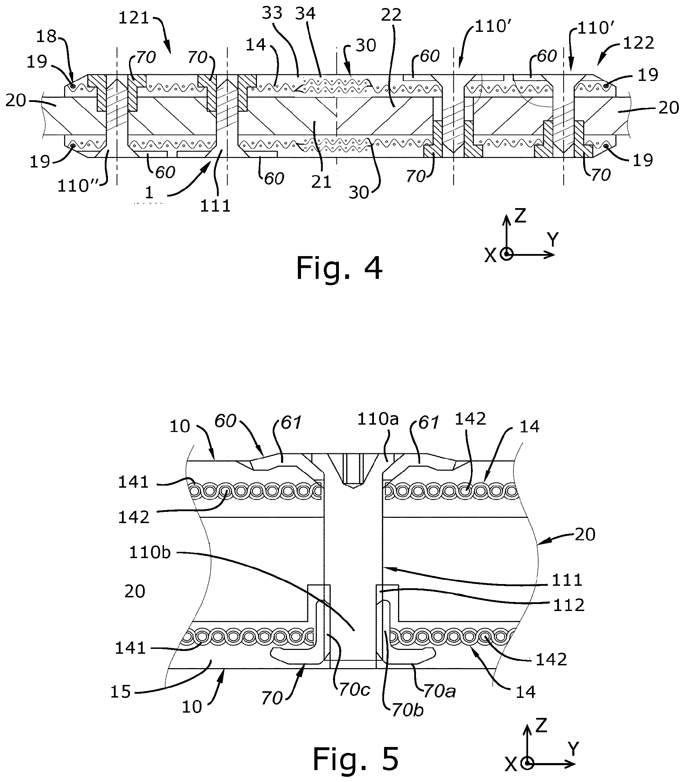

La figure 4 illustre une vue en section longitudinale, qui illustre un dispositif de jonction **100** selon un mode de réalisation similaire à celui de la figure 3. Il diffère sensiblement de ce mode de réalisation en ce que les moyens de fixation **110** sur chacune des ailes **12** formant interface de fixation apte à être fixée à l'une des portions d'extrémité **21, 22** de la bande transporteuse **20** et s'étendent longitudinalement sur deux rangées espacées transversalement, au lieu de trois rangées.

Plus précisément, une première paire **121** d'ailes **12** et la seconde paire **122** d'ailes **12** sont agencées de part et d'autre d'un plan **P** de jonction qui s'étend verticalement et longitudinalement par rapport aux plaques de jonction **10a, 10b,** c'est-à-dire dans un plan vertical et transversal par rapport à la bande transporteuse **20** selon l'exemple décrit ici. Le plan **P** de jonction s'étend longitudinalement au centre de l'ensemble formé par la plaque de jonction inférieure **10a** et la plaque de jonction supérieure **10b,** entre leurs bords **11** respectifs.

De plus, le dispositif de jonction **100** comporte une première série de moyens de fixation **110'** qui sont prévus pour fixer la première paire **121** d'ailes **12** sur la première portion d'extrémité **21** de la bande transporteuse **20** et une seconde série de moyens de fixation **110"** qui sont prévus pour fixer la seconde paire **122** d'ailes **12** sur la seconde portion d'extrémité **22** de la bande transporteuse **20.**

La première série et la seconde série de moyens de fixation **110', 110"** comportent chacune plusieurs rangées (par exemple deux ou trois) de moyens de fixation **100,** chaque rangée comportant une pluralité de moyens de fixation **100** qui sont alignés longitudinalement parallèlement à l'axe de référence **X** et espacés de façon régulière. Bien entendu, ce nombre de rangées peut varier.

La figure 5 est une vue en coupe selon un plan vertical d'un exemple de moyen de fixation **110,** lesquels sont illustrés plus schématiquement sur la figure 4. Ces moyens de fixation **110** comprennent :
- un élément de liaison **111** qui relie un premier élément de fixation **60** avec un second élément de fixation **70,** à travers la bande transporteuse **20,** cet élément de liaison étant constitué par une vis **111** qui s'étend verticalement depuis une tête **110a** jusqu'à un corps formant tronçon d'ancrage **100b** muni d'un filetage **112.**
- le premier élément de fixation **60** agencé pour recevoir la tête **110a** de vis **111** et présentant la forme d'une rondelle percées par un orifice pour le passage de l'élément de liaison **111** et comportant un siège autour de cet orifice formant cuvette qui loge la tête **110a** de la vis **111** associée ; et
- le second élément de fixation **70** présentant la forme d'une douille qui est au moins en partie noyée dans la plaque de jonction **10,** et comprenant une collerette **70a** annulaire qui est saillante radialement par rapport au corps **70b** de la douille **70** pour assurer son ancrage axial dans la matière du corps **15** de la plaque de jonction **10** dans laquelle elle est noyée.

Les moyens de fixation **110'** de la première série comportent chacun un premier élément de fixation **60,** un second élément de fixation **70** et un élément de liaison **111** vertical qui relie le premier élément de fixation **60** sur le second élément de fixation **70,** à travers la bande transporteuse **20.** De plus, le second élément de fixation **70** comprend une partie tubulaire **70b** qui délimite un trou taraudé **70c** vertical et qui fait saillie verticalement depuis la face de la première plaque de jonction **10** orientée vers l'extrémité de la bande transporteuse **20** entre les deux plaques de jonction **10a, 10b** en position d'assemblage. Cette saillie verticale est également recouverte de la matière vulcanisée formant la plaque de jonction de sorte que chaque partie tubulaire qui fait saillie verticalement depuis cette face est recouverte de caoutchouc vulcanisé et donc noyée dans le corps **15** de la plaque de jonction **10** associée. Le trou taraudé **70c** coopère avec le tronçon d'ancrage **110b** de l'élément de liaison **111.**

Ainsi, les moyens de fixation **110'** de la première série permettent de serrer la première paire d'ailes **121** sur la première portion d'extrémité **21** de la bande transporteuse **20.** De même, les moyens de fixation **110"** de la seconde série et permettant de serrer la deuxième paire d'ailes **122** sur la deuxième extrémité **22** de la bande transporteuse **20** sont identiques, mais inversés verticalement dans leur agencement.

En effet, en référence à la figure 4, le premier élément de fixation **60** de chaque moyen de fixation **110'** de la première série est monté sur la plaque de jonction **10b** supérieure et le second élément de fixation **70** est monté sur la plaque de jonction **10a** inférieure. La plaque de jonction inférieure **10a** et la plaque de jonction supérieure **10b** sont identiques, et elles sont décalées angulairement d'un demi-tour autour d'un axe vertical **Z.**

Cette inversion des moyens de fixation **110** est particulièrement avantageuse étant donné que cela simplifie grandement la pose de la plaque de jonction par un opérateur puisqu'en fixant la plaque de jonction à une portion extrémité de la bande transporteuse **20** les moyens de fixation **110,** en particulier les éléments de liaison **111,** présentent une orientation similaire pour une même portion d'extrémité de la bande transporteuse **20** et l'opérateur n'est pas obligé de changer d'orientation pour la mise en place de ces éléments de liaison sur cette même extrémité. En effet, l'alignement vertical des premier et deuxième éléments de fixation **60 ,70** détermine l'orientation des moyens de liaison **111,** notamment des vis qui s'étendent verticalement depuis la tête **110a** jusqu'au corps formant tronçon d'ancrage **110b** taraudé.

On notera en outre que les première et seconde séries **110', 110"** de moyens de fixation **110** sont espacées entre elles longitudinalement par une zone intermédiaire **13** sensiblement au droit du plan **P** de jonction qui est libre de moyens de fixation **110,** c'est-à-dire que dans cette zone intermédiaire **13,** le dispositif de jonction **100** ne comporte pas de moyens de fixation **100.** Ceci améliore l'élasticité du dispositif de jonction **100** à cet endroit et améliore sa tenue mécanique. En effet, une rangée de moyens de fixation **110** au centre du dispositif de jonction **100** pourrait favoriser dans une moindre mesure une amorce de rupture. En outre, le dispositif de jonction moyens de fixation **110** illustré sur la figure 3 et la figure 4 assure la fixation des deux portions d'extrémités **21, 22** de la bande transporteuse **20** sont en contact l'une contre l'autre.

Pour l'installation d'un tel dispositif de jonction moyens de fixation **110,** il est utilisé des entretoises (non illustré sur les figures) au moment du montage contre lesquelles vient buter longitudinalement suivant l'axe **X'** la première des portions d'extrémité **21** de la bande transporteuse **20** qui est mise en place dans la jonction, entre les plaques inférieure **10a** et supérieure **10b,** puis ces entretoises sont retirées avant la mise en place de la seconde portion d'extrémités **22** de la bande transporteuse **20.**

Est illustré également sur cette figures 4 et la figure 5, une armature **14** tissée comprenant des fils de trame **141** et de chaîne **142** entrecroisés ensemble, ladite armature **14** étant délimitée, transversalement par rapport à la plaque de jonction **10,** par des rebords **18.** Cette armature 14 est noyée dans le corps **15** de la plaque de jonction **10** associée en matière souple et élastique.

Il est fait remarquer que sur ces figures l'armature **14,** et notamment les fils de trame **141** et de chaîne **142** ne sont pas illustrés à l'échelle par rapport à la plaque de jonction **10.** Par ailleurs, l'illustration de l'armature **14** est purement schématique, il est bien entendu par exemple que l'armature **14** n'est pas sectionnée au droit des moyens de fixation **110,** comme le dessin peut le laisser suggérer, mais que le maillage de l'armature **14** est continu.

Quel que soit le mode de réalisation mis en œuvre, les plaques de jonction **10** présentent une extensibilité prédéterminée qui doit être suffisamment souple et élastique pour subir sans dommage le passage sur des rouleaux d'entraînement et sur des rouleaux de renvoi tout mais qui doit également être suffisamment rigide pour résister à tous les efforts qu'elle subit.

Cette extensibilité dépend notamment de l'armature **14** noyée dans le matériau **15** formant un enrobage de ladite armature, ce matériau étant relativement souple et élastique, de sorte que la résistance aux efforts de traction durant l'utilisation appliqués par la bande transporteuse **20** sur les moyens de fixation **110** sont supportés par l'armature **14.** En particulier, ces efforts sont répartis et localisés sur chacun des moyens de fixation **110** du dispositif de jonction **100.**

Toutefois, ces efforts de traction relativement important et répétés, peuvent provoquer au niveau des moyens de fixation **110** situés en bordure de l'armature **14,** et donc en bordure de la plaque de jonction **10** correspondante, l'élargissement de ces mailles, et donc un détissage de l'armature **14** ce qui peut nuire à son intégrité et à résistance. Pour garantir la bonne tenue structurelle de la plaque de jonction **10** et donc du dispositif de jonction **100,** et en particulier de l'armature **14,** ladite armature **14** présente, au niveau de ses rebords **18** un renfort de détissage **19** de sorte à éviter le détissage de l'armature **14** lors de l'utilisation du dispositif de jonction **100.** Un tel renfort de détissage comporte par exemple un tissage d'un fil d'apport, distinct des fils de trame **142** et de chaîne **141** de l'armature 14 pour lier sur les contours de l'armature **14** lesdits fils de trame **142** et de chaîne **141.**

Les deux rebords **18** de l'armature **14** sont, sur ces figures, sensiblement parallèles entre eux et traversant dans la largeur la bande transporteuse **20** en position d'utilisation. Une telle armature **14** offre un avantage certain en ce qu'elle évite le détissage de l'armature **14** soumis aux efforts de traction. Par ailleurs, l'avantage d'une telle configuration ne s'arrête pas à cet avantage. Il a effectivement été constaté qu'avec un renfort de détissage **19** situé en bordure, le long du rebord **18** de l'armature **14,** cela entraîne une répartition plus homogène de l'effort de traction sur toutes les lignes ou rangées de moyens de fixation **110.**

Conformément à l'invention, la zone intermédiaire **13** comporte un fourreau **30** qui s'étend de façon continue dans la direction longitudinale **X** de référence de la plaque de jonction **10.** Ce fourreau **30** forme une poche s'étendant longitudinalement et est configurée pour y loger un équipement électronique relativement plat tel qu'un circuit électrique. Dans un mode de réalisation avantageux, le fourreau **30** loge un équipement électronique comprenant au moins une radioétiquette ou une puce de radio-identification (RFID) dans son espace intérieur **34,** un tel équipement étant particulièrement plat et souple. Les radio-étiquettes comprennent une antenne associée à une puce électronique qui leur permet de recevoir et de répondre aux requêtes radio émises depuis l'émetteur-récepteur. Ces puces électroniques contiennent un identifiant et éventuellement des données complémentaires.

L'étendue continue du fourreau **30** le long de la direction longitudinale offre notamment la possibilité à la plaque de jonction de pouvoir être stockée en bande **10'** de plaques de jonction **10,** comme illustré sur la figure 9A et la figure 9B. Ainsi, quelle que soit la dimension souhaitée, chaque plaque de jonction **10** présentera une configuration similaire et le circuit électronique peut être inséré dans le fourreau **30** de la plaque de jonction **10** correspondante du dispositif de jonction **100** après la découpe à la dimension souhaitée.

Comme c'est le cas dans les différents modes de réalisation illustrés, le fourreau **30** est conçu de sorte à être solidaire de l'armature **14** et de préférence également textile, comme l'armature **14.** De cette manière, le fourreau **30** offre une configuration ou il participer au renfort de la plaque de jonction **10** associée, comme l'armature **14,** en suivant également l'extensibilité de l'armature **14.** Par ailleurs, cela permet de maintenir fixe la position axiale du fourreau **30** par rapport à l'axe de longitudinale **X'** de la bande transporteuse **20,** et donc l'équipement électronique qu'il reçoit, quand bien même la plaque de jonction subit des déformations au passage des rouleaux d'entraînement, de renvoi et tendeurs.

Le fourreau **30** présente des ouvertures **300** débouchant de part et d'autre longitudinalement **X** de la plaque de jonction **10.** De cette manière, l'équipement électronique peut être inséré ou retiré facilement de l'espace intérieur **34** du fourreau **30** depuis l'extérieur à travers ces dites ouvertures **300.** En pratiques ces ouvertures **300** ne constituent pas une problématique nécessitant d'être refermées. En effet, des essais menés avec un circuit électronique logé dans le fourreau ont permis de constater que durant son utilisation, la position transversale du circuit électronique dans l'espace intérieur **34** du fourreau **30** n'évolue pas par rapport à la plaque de jonction **10.** Il peut toutefois être souhaité fermer ces ouvertures. Dans ce cas on peut envisager que la plaque de jonction **10** comprend des moyens de fermeture de l'une au moins de ces ouvertures **300,** ces moyens de fermeture pouvant comprendre par exemple de la colle.

Le fourreau **30** forme une poche comprenant deux nappes textiles **31, 32** distinctes superposées et jointes ensemble au niveau de deux jointures **33** s'étendant longitudinalement pour délimiter l'espace intérieur **34** du fourreau **30.** La distance entre les deux jointures **33** délimite transversalement le fourreau **30** et détermine sa largeur. La largeur du fourreau **30** est de préférence inférieure ou égale à la largeur de la zone intermédiaire **13.** De cette manière, on évite que les moyens de fixations **110** interfèrent avec le fourreau **30,** et donc avec le matériel électronique tel qu'une carte à puce, un fil électrique, ou autre. Le fourreau **30** est de préférence centré par rapport à la zone intermédiaire **13,** entre les deux ailes **12.** De même, la zone intermédiaire **13** est elle-même centrée transversalement par rapport aux deux ailes **12.** Dans cet exemple la largeur du fourreau est de 35 mm, de préférence comprise entre 30 et 35 mm, tandis que l'entraxe mesurée entre les deux rangées de moyens de fixation **110** encadrant transversalement la zone intermédiaire **13** est de 45 mm.

Bien entendu, les dimensions de la zone intermédiaire et celles du fourreau peuvent varier en fonction de la configuration de la plaque de jonction considérée, du nombre de rangées de moyens de fixation **110** (deux, trois, etc.) pour chacune des ailes **12.** Par exemple dans une première configuration, l'entraxe mesurée entre les deux rangées de moyens de fixation **110** encadrant transversalement la zone intermédiaire **13** est compris entre 35 et 55 mm, de préférence entre 40 et 50 mm, par exemple 45 mm. Dans une seconde configuration, l'entraxe mesurée entre les deux rangées de moyens de fixation **110** encadrant transversalement la zone intermédiaire **13** est compris entre 60 et 80 mm, de préférence entre 65 et 75 mm, par exemple 70 mm. Dans une troisième configuration, l'entraxe mesurée entre les deux rangées de moyens de fixation **110** encadrant transversalement la zone intermédiaire **13** est compris entre 90 et 110 mm, de préférence entre 95 et 105 mm, par exemple 100 mm. En fonction de cet entraxe, la dimension du fourreau est contrainte par cette valeur et la dimension des moyens de fixation **110** pour être strictement inférieur à cet entraxe et ne pas risquer que l'équipement électronique soit traversé par des moyens de fixation **110.**

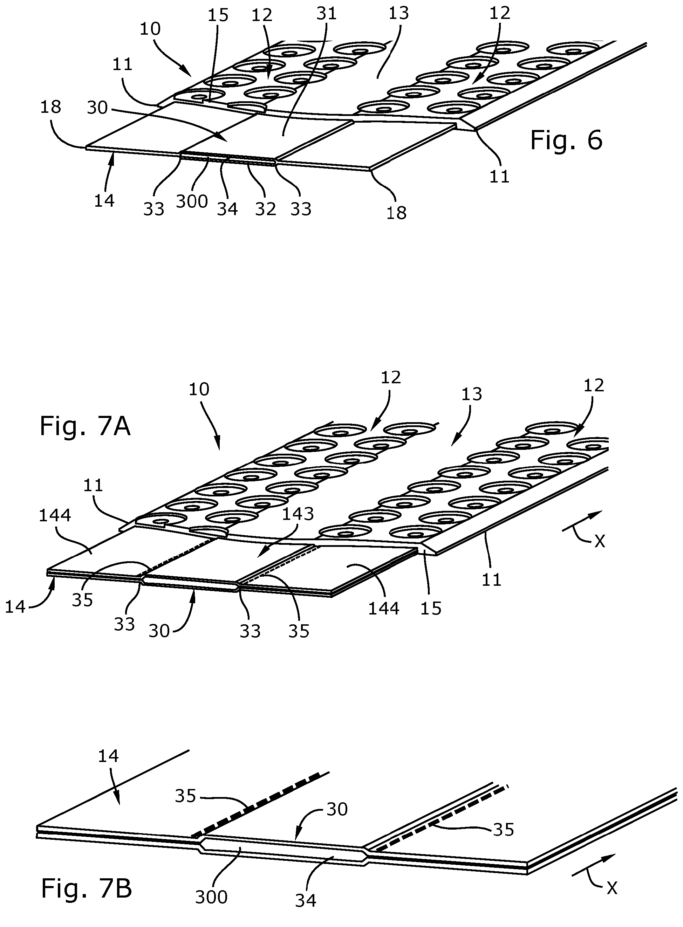

Les figures 7A, 7B et la figures 8 illustrent deux modes de réalisation dans lesquels chacune des deux jointures **33** comprennent un fil **35** cousu longitudinalement par rapport à la plaque de jonction **10** pour assembler les deux nappes **31, 32** textiles superposées.

Dans le mode de réalisation illustré sur la figure 7A et la figure 7B, l'armature **14** est formé de deux nappes rectangulaires superposées de mêmes dimensions. De manière générale, l'armature **14** textile est dimensionnée pour s'étendre continument horizontalement dans les deux ailes **12** et la zone intermédiaire **13** en étant noyé dans le corps **15** de la plaque de jonction **10** de sorte à renforcer la plaque de jonction sur quasiment toute l'étendue de la plaque de jonction. Ici les deux nappes superposées de l'armature **14** sont jointes par seulement deux coutures **33** axiales délimitant transversalement le fourreau **30** au niveau d'une portion centrale **143.** La portion centrale **143** formant le fourreau **30** est ici interposée transversalement suivant l'axe transversal **Y** entre deux portions distales **144** formées chacune des prolongements des deux nappes **31, 32** de textiles de part et d'autre du fourreau **30.**

Dans ce mode de réalisation, le fourreau **30** est formée et constitué par deux portions de l'armature **14** textile et les jointures **33.** En particulier :
- une première des deux nappes **31, 32** textiles du fourreau **30** est formée à partir d'une portion centrale de l'une des deux nappes de l'armature **14** textile ; et
- une deuxième des deux nappes **31, 32** textiles du fourreau **30** est formée à partir d'une portion centrale de l'autre des deux nappes de l'armature **14** textile.

Lors de la fabrication de la plaque de jonction **10,** une feuille de matière vulcanisable, par exemple le même matériau que celui constituant le corps **15** pourra être interposée verticalement entre les deux nappes de textile de chacune des portions distales **144** situées dans le prolongement des deux nappes **31, 32** de textiles de part et d'autre du fourreau **30.** De cette manière on permet d'éviter tout glissement entre les deux nappes textiles constituant l'armature **14** s'étendant dans les ailes **12** lors de l'utilisation du dispositif de jonction **100** comprenant une telle plaque de jonction **10.**

Le mode de réalisation illustré sur la figure 8 diffère du mode de réalisation illustré sur la figure 7A et la figure 7B en ce que l'une des deux nappes textile formant l'armature **14,** ici la nappe supérieure, est coupée longitudinalement au voisinage de la jointure **33,** à l'extérieure par rapport à la portion centrale **143,** de sorte que le fourreau **30** est formé au niveau de la portion centrale **143** par deux nappes textiles **31, 32** distinctes superposées et jointes ensemble au niveau de deux jointures 33, et les deux portions distales sont formées chacune par une unique nappe textile qui sont formées par le prolongement continue de la nappe inférieure.

La figure 6 illustre quant à elle un mode de réalisation d'un fourreau est tissé dans l'armature **14** textile. En effet, l'armature **14** comprend des fils de trame **141** et des fils de chaîne **142** tissés ensemble en une pièce. Cette même configuration de l'armature **14** est également visible sur la figure 2 et la figure 4. Dans une telle configuration, la somme des épaisseurs des deux nappes textiles **31, 32** prise au niveau du fourreau **30,** c'est-à-dire au droit de la portion centrale **143,** est sensiblement égale à l'épaisseur de la nappe textile de l'armature **14** constituant les portions distales **144.** De cette manière, l'épaisseur de l'armature **14** est constante sur toute son étendue tout en intégrant le fourreau **30.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est entendu par exemple qu'un dispositif de jonction selon l'invention peut comporter une seule plaque de jonction munie d'un fourreau, par exemple la plaque de jonction supérieure **10B.** Lorsque la plaque de jonction supérieure **10B** est placée en position de jonction de deux portions d'extrémité de bande transporteuse, ladite plaque de jonction recouvre un même côté (inférieur ou supérieur) de chacune des portions d'extrémités de la bande transporteuse.

On notera que différentes configurations ont été illustrées dans lesquelles le fourreau comprend au moins deux nappes textiles distinctes superposées et jointes ensemble au niveau d'au moins deux jointures espacées transversalement pour délimiter un espace intérieur du fourreau, par exemple sur les figures 6, 7A, 7B et 8. Bien entendu, ces modes de réalisation de sont pas exhaustifs. Le fourreau peut, par exemple, être formé par un tissage particulier dans l'armature elle-même, comme pour le mode de réalisation de la figure 8, c'est-à-dire à partir des fils constitutifs de l'armature, mais ce tissage peut être complété par des fils supplémentaires de renfort pour venir renforcer localement le tissage délimitant le fourreau.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Plaque de jonction (10) de deux portions extrémités (21, 22) de bande transporteuse (20), la plaque de jonction (10) présentant deux bords latéraux (11) s'étendant chacun dans une direction longitudinale (X) de référence de la plaque de jonction (10), la plaque de jonction (10) comportant deux ailes (12) s'étendant continument dans la direction longitudinale (X) de référence, chacune le long d'un des bords latéraux (11), et formant chacune une interface de fixation apte à être fixée à l'une des portions d'extrémité (21, 22) de la bande transporteuse (20), et une zone intermédiaire (13) s'étendant continument dans la direction longitudinale (X) de référence de la plaque de jonction (10), la zone intermédiaire (13) étant située à distance des deux bords latéraux (11) et reliant les deux ailes (12), **caractérisée en ce que** la zone intermédiaire (13) comporte un fourreau (30) s'étendant de façon continue dans la direction longitudinale (X) de référence de la plaque de jonction (10).

2. Plaque de jonction (10) selon la revendication 1, **caractérisée en ce que** la plaque de jonction (10) comporte un corps (15) en matériau flexible, le corps (15) de la plaque de jonction (10) comprenant, de préférence constitué par, la zone intermédiaire (13) et les ailes (12) de la plaque de jonction (10), la plaque de jonction (10) comprenant une armature (14), de préférence textile, logée à l'intérieur du corps (15), le fourreau (30) étant solidaire de l'armature (14) et de préférence textile.

3. Plaque de jonction (10) selon la revendication 1 ou 2, **caractérisée en ce que** le fourreau (30) présente des ouvertures (300) débouchant de part et d'autre longitudinalement (X) de la plaque de jonction (10).

4. Plaque de jonction (10) selon l'une quelconque des revendications précédentes, **caractérisée en ce que** le fourreau (30) comprend au moins deux nappes textiles (31, 32) distinctes superposées et jointes ensemble au niveau d'au moins deux jointures (33) espacées transversalement pour délimiter un espace intérieur (34) du fourreau (30).

5. Plaque de jonction (10) selon la revendication 4, **caractérisée en ce que** les jointures (33) comprennent au moins un fil (35) cousu pour assembler les deux nappes (31, 32) textiles.

6. Plaque de jonction (10) selon l'une quelconque des revendications précédentes dépendant au moins de la revendication 2, **caractérisée en ce qu'**une partie au moins du fourreau (30) est constitué par au moins une portion de l'armature (14) textile.

7. Plaque de jonction (10) selon l'une des revendications 4 à 6, **caractérisée en ce qu'**au moins une première des deux nappes (31, 32) textiles du fourreau (30) est formé à partir d'au moins une portion de l'armature (14) textile.

8. Plaque de jonction (10) selon la revendication 7, **caractérisée en ce que** le fourreau (30) est tissé dans l'armature (14) textile.

9. Plaque de jonction (10) selon la revendication 8, **caractérisé en ce que** l'armature (14) comprend des fils de trame (141) et des fils de chaîne (142) tissés ensemble en une pièce, l'armature (14) textile comportant, en coupe transversale, une portion centrale (143) formant le fourreau et interposée entre deux portions distales (144), les deux portions distales (144) comportant de préférence une couche de textile tissé.

10. Dispositif de jonction (100) de deux portions d'extrémités (21, 22) de bande transporteuse (20) **caractérisé en ce qu'**il comprend au moins une plaque de jonction (10) selon l'une quelconque des revendications précédentes.

11. Dispositif de jonction (100) selon la revendication précédente, **caractérisé en ce qu'**il comprend au moins deux plaques de jonction (10) configurées pour recouvrir chacune un côté distinct des portions d'extrémités (21, 22) de la bande transporteuse (20) de sorte que les portions d'extrémités (21, 22) de la bande transporteuse (20) soient disposées chacune entre les deux plaques de jonction (10), les plaques de jonction (10) étant fixées ensemble par des moyens de fixation (110) agencés pour traverser respectivement une aile (12) de l'une des plaques de jonction (10), une des portions d'extrémité (21, 22) de la bande transporteuse (20) puis une aile (12) de l'autre plaque de jonction (10), le dispositif de jonction (100) étant **caractérisé en ce que** l'une au moins des deux plaques de jonction (10), de préférence les deux plaques de jonction (10), est(sont) conforme(s) à l'une quelconque des revendications 1 à 9.

12. Bande (10') de plaques de jonction (10) présentant deux bords latéraux (11) s'étendant chacun continument dans une direction longitudinale (X') de référence de la bande (10') de plaques de jonction (10), la bande (10') de plaques de jonction (10) comportant deux ailes (12) s'étendant continument dans la direction longitudinale (X') de référence, chacune le long d'un des bords latéraux (11), et formant chacune une interface de fixation apte à être fixée à l'une des portions d'extrémité (21, 22) de bande transporteuse (20), et une zone intermédiaire (13) s'étendant continument dans la direction longitudinale (X') de référence de la bande (10') de plaques de jonction (10), la zone intermédiaire (13) étant située à distance des deux bords latéraux (11) et reliant les deux ailes (12), **caractérisée en ce que** la zone intermédiaire (13) comporte un fourreau (30) s'étendant de façon continue dans la direction longitudinale (X') de référence de la bande (10') de plaques de jonction (10).

## Patentansprüche

1. Verbindungsplatte (10) zum Verbinden zweier Endabschnitte (21, 22) eines Förderbandes (20), worin die Verbindungsplatte (10) zwei Seitenkanten (11) aufweist, die sich jeweils in einer Längsreferenzrichtung (X) der Verbindungsplatte (10) erstrecken, worin die Verbindungsplatte (10) zwei Flügel (12) aufweist, die sich kontinuierlich jeweils entlang einer der Seitenkanten (11) in der Längsreferenzrichtung (X) erstrecken, und jeweils eine Befestigungsschnittstelle ausbilden, die an einem der Endabschnitte (21, 22) des Förderbandes (20) befestigt werden kann, und einen Zwischenbereich (13) aufweist, der sich kontinuierlich in der Längsreferenzrichtung (X) der Verbindungsplatte (10) erstreckt, worin der Zwischenbereich (13) in einem Abstand von den beiden Seitenkanten (11) angeordnet ist und die beiden Flügel (12) verbindet, **dadurch gekennzeichnet, dass** der Zwischenbereich (13) eine Hülse (30) umfasst, die sich kontinuierlich in der Längsreferenzrichtung (X) der Verbindungsplatte (10) erstreckt.

2. Verbindungsplatte (10) nach Anspruch 1, **dadurch gekennzeichnet, dass** die Verbindungsplatte (10) einen Körper (15) aus flexiblem Material umfasst, worin der Körper (15) der Verbindungsplatte (10) vorzugsweise aus dem Zwischenbereich (13) und den Flügeln (12) der Verbindungsplatte (10) besteht, worin die Verbindungsplatte (10) eine Verstärkung (14), vorzugsweise aus Textil, umfasst, die innerhalb des Körpers (15) untergebracht ist, worin die Hülse (30) einstückig mit der Verstärkung (14) ausgebildet und vorzugsweise aus Textil ist.

3. Verbindungsplatte (10) nach Anspruch 1 oder 2, **dadurch gekennzeichnet, dass** die Hülse (30) Öffnungen (300) aufweist, die sich in Längsrichtung (X) auf beiden Seiten der Verbindungsplatte (10) erstrecken.

4. Verbindungsplatte (10) nach einem der vorstehenden Ansprüche, **dadurch gekennzeichnet, dass** die Hülse (30) mindestens zwei getrennte Textilschichten (31, 32) umfasst, die übereinander liegen und an mindestens zwei quer beabstandeten Verbindungsstellen (33) miteinander verbunden sind, um einen Innenraum (34) der Hülse (30) zu begrenzen.

5. Verbindungsplatte (10) nach Anspruch 4, **dadurch gekennzeichnet, dass** die Verbindungsstellen (33) mindestens einen Faden (35) umfassen, der zum Verbinden der beiden Textilschichten (31, 32) eingenäht ist.

6. Verbindungsplatte (10) nach einem der vorstehenden Ansprüche, die mindestens auf Anspruch 2 beruhen, **dadurch gekennzeichnet, dass** mindestens ein Teil der Hülse (30) aus mindestens einem Abschnitt der Textilverstärkung (14) besteht.

7. Verbindungsplatte (10) nach einem der Ansprüche 4 bis 6, **dadurch gekennzeichnet, dass** mindestens eine erste der beiden Textilschichten (31, 32) der Hülse (30) aus mindestens einem Abschnitt der Textilverstärkung (14) gebildet ist.

8. Verbindungsplatte (10) nach Anspruch 7, **dadurch gekennzeichnet, dass** die Hülse (30) in die textile Verstärkung (14) eingewebt ist.

9. Verbindungsplatte (10) nach Anspruch 8, **dadurch gekennzeichnet, dass** die Verstärkung (14) Schussfäden (141) und Kettfäden (142) umfasst, die in einem Stück miteinander verwoben sind, worin die Textilverstärkung (14) im Querschnitt einen mittleren Abschnitt (143) aufweist, der die Hülse bildet und zwischen zwei distalen Abschnitten (144) angeordnet ist, worin die beiden distalen Abschnitte (144) vorzugsweise eine Schicht aus gewobenem Textil umfassen.

10. Vorrichtung (100) zum Verbinden zweier Endabschnitte (21, 22) eines Förderbandes (20), **dadurch gekennzeichnet, dass** diese mindestens eine Verbindungsplatte (10) nach einem der vorstehenden Ansprüche umfasst.

11. Verbindungsvorrichtung (100) nach dem vorstehenden Anspruch, **dadurch gekennzeichnet, dass** diese mindestens zwei Verbindungsplatten (10) umfasst, die ausgestaltet sind, jeweils eine separate Seite der Endabschnitte (21, 22) des Förderbandes (20) abzudecken, sodass die Endabschnitte (21, 22) des Förderbandes (20) jeweils zwischen den beiden Verbindungsplatten (10) angeordnet sind, worin die Verbindungsplatten (10) durch Befestigungsmittel (110) miteinander verbunden sind, die so angeordnet sind, dass sie jeweils durch einen Flügel (12) einer der Verbindungsplatten (10), einen der Endabschnitte (21, 22) des Förderbandes (20) und dann einen Flügel (12) der anderen Verbindungsplatte (10) hindurchgehen, worin die Verbindungsvorrichtung (100) **dadurch gekennzeichnet ist, dass** mindestens eine der beiden Verbindungsplatten (10), vorzugsweise beide Verbindungsplatten (10), einem der Ansprüche 1 bis 9 entspricht.

12. Streifen (10') aus Verbindungsplatten (10) mit zwei Seitenkanten (11), die sich jeweils kontinuierlich in einer Längsreferenzrichtung (X') des Streifens (10') aus Verbindungsplatten (10) erstrecken, worin der Streifen (10') aus Verbindungsplatten (10) zwei Flügel (12) aufweist, die sich kontinuierlich in der Längsreferenzrichtung (X') erstrecken, die sich jeweils entlang einer der Seitenkanten (11) erstrecken und jeweils eine Befestigungsschnittstelle bilden, die an einem der Endabschnitte (21, 22) des Förderbandes (20) befestigt werden kann, und einen Zwischenbereich (13), der sich kontinuierlich in der Längsreferenzrichtung (X') des Streifens (10') aus Verbindungsplatten (10) erstreckt, worin der Zwischenbereich (13) in einem Abstand von den beiden Seitenkanten (11) angeordnet ist und die beiden Flügel (12) verbindet, **dadurch gekennzeichnet, dass** der Zwischenbereich (13) eine Hülse (30) umfasst, die sich kontinuierlich in der Längsreferenzrichtung (X') des Streifens (10') aus Verbindungsplatten (10) erstreckt.

## Claims

1. A splice plate (10) for splicing two end portions (21, 22) of a conveyor belt (20), the splice plate (10) having two side edges (11) each extending in a longitudinal reference direction (X) of the splice plate (10), the splice plate (10) having two wings (12) extending continuously in the longitudinal reference direction (X), each along one of the side edges (11), and each forming a fastening interface capable of being fastened to one of the end portions (21, 22) of the conveyor belt (20), and an intermediate zone (13) extending continuously in the longitudinal reference direction (X) of the splice plate (10), the intermediate zone (13) being located at a distance from the two side edges (11) and connecting the two wings (12), **characterised in that** the intermediate zone (13) comprises a sleeve (30) extending continuously in the longitudinal reference direction (X) of the connecting plate (10).

2. Splice plate (10) according to claim 1, **characterised in that** the splice plate (10) comprises a body (15) made of flexible material, the body (15) of the splice plate (10) comprising, preferably consisting of, the intermediate zone (13) and the wings (12) of the splice plate (10), the splice plate (10) comprising a reinforcement (14), preferably textile, housed inside the body (15), the sleeve (30) being integral with the reinforcement (14) and preferably textile.

3. Splice plate (10) according to claim 1 or 2, **characterised in that** the sleeve (30) has openings (300) extending longitudinally (X) on both sides of the splice plate (10).

4. Splice plate (10) according to any of the preceding claims, **characterised in that** the sleeve (30) comprises at least two separate textile layers (31, 32) superimposed and joined together at at least two transversely spaced joints (33) to delimit an interior space (34) of the sleeve (30).

5. Splice plate (10) according to claim 4, **characterised in that** the joints (33) comprise at least one thread (35) sewn to assemble the two textile layers (31, 32).

6. Splice plate (10) according to any of the preceding claims depending at least on claim 2, **characterised in that** at least part of the sleeve (30) is constituted by at least one portion of the textile reinforcement (14).

7. Splice plate (10) according to any of claims 4 to 6, **characterised in that** at least a first of the two textile layers (31, 32) of the sleeve (30) is formed from at least a portion of the textile reinforcement (14).

8. Splice plate (10) according to claim 7, **characterised in that** the sleeve (30) is woven into the textile reinforcement (14).

9. Splice plate (10) according to claim 8, **characterised in that** the reinforcement (14) comprises weft threads (141) and warp threads (142) woven together in one piece, the textile reinforcement (14) having, in transverse section, a central portion (143) forming the sleeve and interposed between two distal portions (144), the two distal portions (144) preferably comprising a layer of woven textile.

10. Device (100) for splicing two end portions (21, 22) of a conveyor belt (20), **characterised in that** it comprises at least one splice plate (10) according to any of the preceding claims.

11. A splice device (100) according to the preceding claim, **characterised in that** it comprises at least two splice plates (10) configured to each cover a separate side of the end portions (21, 22) of the conveyor belt (20) so that the end portions (21, 22) of the conveyor belt (20) are each disposed between the two splice plates (10), the splice plates (10) being secured together by fastening means (110) arranged to pass respectively through a wing (12) of one of the splice plates (10), one of the end portions (21, 22) of the conveyor belt (20) and then a wing (12) of the other connecting plate (10), the splice device (100) being **characterised in that** at least one of the two splice plates (10), preferably both splice plates (10), complies with any one of claims 1 to 9.

12. Strip (10') of splice plates (10) having two side edges (11) each extending continuously in a longitudinal reference direction (X') of the strip (10') of connecting plates (10), the strip (10') of splice plates (10) having two wings (12) extending continuously in the longitudinal reference direction (X'), each along one of the side edges (11), and each forming a fastening interface capable of being fastened to one of the end portions (21, 22) of the conveyor belt (20), and an intermediate zone (13) extending continuously in the longitudinal reference direction (X') of the strip (10') of connecting plates (10), the intermediate zone (13) being located at a distance from the two side edges (11) and connecting the two wings (12), **characterised in that** the intermediate zone (13) comprises a sleeve (30) extending continuously in the longitudinal reference direction (X') of the strip (10') of connecting plates (10).
